# EUROPEAN PATENT SPECIFICATION

(11) **EP 0 256 852 B1**
(45) Date of publication and mention of the grant of the patent: **02.11.1994**
(21) Application number: 87307146.8
(22) Date of filing: 12.08.1987
(51) Int. Cl.: C08G 18/67, C08J 5/06, D01F 11/10

(54) **Method of sizing carbon fibers with urethanes**
Verfahren zur Behandlung von Kohlenstoffasern mit Urethanen
Méthode de traitement de fibres de carbone avec des uréthanes

(30) Priority: 12.08.1986 JP 188854/86
(43) Date of publication of application: 24.02.1988
(73) Proprietor: TOA NENRYO KOGYO KABUSHIKI KAISHA, Tokyo 100 (JP)
(72) Inventor: Saito, Makoto, Iruma-gun Saitama (JP); Toki, Hiroshi, Hiki-gun Saitama (JP); Miyazaki, Makoto, Sakado-shi Saitama (JP); Inoue, Hiroshi, Iruma-gun Saitama (JP)
(74) Representative: Diamond, Bryan Clive

(56) References cited:
- EP-A- 0 076 414
- EP-A- 0 168 173

## Description

This invention relates to a method of sizing carbon fibers using a urethane sizing agent and to the sized fibers and to composite materials thereof.

Carbon fibers are useful in material having light weight, high strength and high modulus of elasticity in various industrial fields, e.g. the motor car industry and airplane industry; recently, an excellent quality of carbon fiber has been used to an increasing extent in a range of applications including sports goods and building materials. For these purposes composite materials are used composed of carbon fibers in a matrix or binder or a thermosetting synthetic resin (e.g., an epoxy resin, unsaturated polyester resin, a vinyl ester resin, phenolic resin or diarylphthalate resin) or a thermoplastic polymer (e.g., a polyamide, a polyolefin, a polyacetal, a polycarbonate or a linear polyester).
in manufacturing such composite material it is known to use a sizing agent in order to facilitate the handling of the carbon fibers. Moreover, a suitably selected sizing agent can improve the adhesion of the carbon fibers to the matrix, which depends on surface treatment of the carbon fiber.

The adhesive property of the carbon fiber to the matrix changes, in general, depending on a surface treating agent used for surface treatment of the carbon fibers. Therefore, when using an epoxy resin as a matrix resin, for instance, it is required to use an epoxy type sizing agent for the fibers to improve their adhesion to the epoxy resin.

A reduction in the number of production steps is desirable to reduce the production cost, and so a composite of carbon fibers with an unsaturated polyester resin or vinyl ester resin has been used because of the short hardening time of these resins.

However a conventional epoxy type of sizing agent cannot then be used satisfactorily since the treated carbon fiber adheres poorly to unsaturated polyester resin or to vinylester resin, therefore the shearing strength (ILSS) of inter-layers of the matrix resin and the carbon fiber is low - the shearing strength can be a measure of the adhesive property.

Sizing agents which improve some of these defects are disclosed in Japanese Patent Publication No. 03298/84, but they do not give sufficient ILSS.

Generally, a sizing agent is dissolved in a solvent or dispersed into an emulsion and then applied to the fibers, e.g. by dipping, and the fibers are dried, so that the solvent or dispersion medium evaporates; then the sizing agent fuses to cover the surface of the fiber and a thin film of the sizing agent is formed by which the converging of the fibers is improved. Therefore, a sizing agent which can adhere to the fibers enough to strengthen their adhesion to a matrix resin is preferable.

An object of the present invention is thus to provide an imposed method of sizing.

A second object of the invention is to provide a composite material of a carbon fiber with an unsaturated polyester or vinyl ester resin having an excellent adhesive property and which can be prepared rapidly.

We have discovered that an unsaturated urethane compound having a reactive double bond can satisfy the above required condition and can be used as part of a sizing agent when an unsaturated polyester or a vinyl ester resin is used as a matrix resin.

A method of sizing carbon fibers, according to the invention comprises coating the fibers with a liquid sizing composition prior to their incorporation into a polymeric matrix consisting of an unsaturated polyester or a vinyl ester resin,
said sizing composition containing as a sizing agent an unsaturated urethane compound produced in a process comprising a reaction between at least one isocyanate compound with at least one unsaturated alcohol; and if more than one alcohol and/or isocyanate is used, their addition to the reaction system is arranged to avoid more than one reaction occurring simultaneously, a further reactant being added in a further step after one reaction is completed, the other of the reagents being present in excess of the stoichiometric amount; or more than two reagents of the same kind being present if one of them will only react after completion of a previous reaction;
and the final reaction product being recovered.

The invention also includes carbon fibers for incorporation into a polymeric matrix, consisting of an unsaturated polyester resin or a vinyl ester resin, which are coated with a sizing composition as aforesaid; and a composite material comprising carbon fibers which have been sized by the said method of the invention, incorporated in a polymeric matrix consisting of an unsaturated polyester or a vinyl ester resin, the matrix being then hardened. composition comprising an unsaturated urethane compound resulting from the reaction of an isocyanate with an unsaturated alcohol having at least one double bond; and a composite material of the aforesaid sized carbon fibers incorporated in a polyester or vinyl ester polymer hardened matrix.

The sizing agent used in the present invention can improve the handling of the carbon fiber after sizing treatment, moreover, it fits well with the unsaturated polyester or vinylester resin and can combine therewith by cross-linking reaction, therefore the carbon fiber adheres firmly to these resins and a composite material having high quality can easily be manufactured. By the present invention, it is possible to simplify the production of the composition, since the rapidly hardenable unsaturated polyester or vinylester resin can be used as matrix resin instead of the conventionally used epoxy resin. Reduction in cost of the composition is thus possible.

Unsaturated alcohols which are used in the present invention can be selected as desired from compounds which can react with isocyanates to form a urethane bond. Suitable alcohols are olefinic alcohols, such as allyl alcohol, crotyl alcohol, 3-butene-1-ol, 3-butene-2-ol, 1-butene-3-ol, 2-butene-1,4-diol, 2-pentene-1-ol, 3-pentene-1-ol, 4-pentene-1-ol, 4-pentene-2-ol, 1-hexene-3-ol, 3-hexene-3-ol, 3-hexene-1-ol, 2-hexene-1-ol, 4-hexene-1-ol and 5-hexene-1-ol; and alkylene oxide adducts of unsaturated carboxylic acids. Suitable unsaturated carboxylic acids are acrylic acid, methacrylic acid, crotonic acid, vinyl acetic acid, allyl acetic acid, angelic acid, ethylcrotonic acid, oleic acid, erucic acid, elaidic acid, maleic acid, fumaric acid, an arylmalonic acid, itaconic acid and citraconic acid, and alkylene oxides are ethylene oxide and propylene oxide.

The isocyanate compounds used in the present invention can be selected from known isocyanates, such as tolylenediisocyanate, di-tolylenediisocyanate, diphenylmethane-di-isocyanate, dimethyl-diphenylmethane-di-isocyanate, hexamethylene-di-isocyanate, metaphenylene-di-isocyanate, propylisocyanate and butylisocyanate.

The sizing agent used in the present invention can be obtained easily by selecting a combination of unsaturated alcohol and isocyanate compound, carrying out a urethane-forming reaction under suitable known conditions and removing the reaction solvent after the end of the reaction.

If more than one alcohol and/or isocyanate is used, their addition to the reaction system must be arranged to avoid more than one reaction occurring together, so as to avoid the formation of by-products. Thus the further reactant can be added ater one reaction is completed, the other of the reagents being present in stoichiometrically larger amount; or more than two reagents of the same kind (e.g. alcohols) can be present if one of them will only react after completion of a previous reaction.

The sizing agent of the present invention can be a self-emulsifiable type which is able to be dispersed in water by adjusting the amount of ethylene oxide or propylene oxide introduced into it. Moreover, it can not only improve the sizing property of the carbon fiber if the agent's molecular weight is larger but also improve the spreadability or flexibility of the carbon fiber if its molecular weight is smaller.

The polarity of the urethane bond contained in the sizing agent of the invention is high so that the affinity of the sizing agent to a functional group, such as -COOH or -OH, present in a surface of the carbon fiber is high. On the other hand, a double bond in the sizing agent is able to undergo cross-linking reaction with a double bond in an unsaturated polyester resin or vinylester resin, to form a strong bond with the matrix.

Thus the sizing agent produces a coupling effect as it combines with the surfaces of both the carbon fiber and the matrix; therefore, it causes the carbon fiber to adhere fast to the matrix to produce a strong composite material.

In the present invention any known carbon fiber can be used, such as the polyacrylonitrile type or pitch type.

In order to coat the sizing agent on the surface of the carbon fiber, various methods can be used, such as spray coating or dip coating, using a solution of the sizing agent in an organic solvent (such as methylethyl ketone), or using a dispersion of the sizing agent in a form of an aqueous emulsion. It is preferable to use the sizing agent as an aqueous emulsion from the viewpoint of cost and enviromental health.

It is preferable to carry out an oxidation treatment on the surface of the carbon fiber by a method such as electrolytic oxidation before application of the sizing agent, in order to cause the sizing agent to adhere easily to the surface.

A levelling agent such as an aliphatic alcohol ester (e.g., oleyl oleate) can be added to the coating solution or emulsion, if necessary, to improve the anti-abrasion property of the fibers after sizing treatment.

Suitable matrix resins which are used are thermosetting resins or a thermoplastic resin each as exemplified above for the prior art; an unsaturated polyester resin or vinylester resin are used, since they have unsaturated bonds which can react with double bonds of the sizing agent to form crosslinks.

The matrix resin is hardened in known manner to complete manufacture of the composite material.

The adhesive strength of the composite material thus obtained can be estimated by measuring (e.g. by the short beam method) the inter-laminar shearing strength (ILSS). A specific example of this measurement is as follows; A unidirectional carbon fiber matrix resin composite material containing 60 volume % of carbon fiber is prepared and is cut into pieces of 2 mm thickness x 6 mm width x 14 mm length. The fulcrums are set so that the distance between them is 10 mm, then the ILSS is measured under a condition of cross-head speed 1 mm/minute.

The present invention is now illustrated by the following Examples.

### EXAMPLE 1.

26.0 g of a) reaction product of 1 mole of methacrylic acid with 1 mole of ethyleneoxide, 1000 ml of a toluene as a solvent and 0.01 g of a hydroquinone as a polymerization inhibitor was put in a reaction vessel having a stirrer, a thermometer, a N₂ gas introduction tube, a reagent pour tube and an exhaust aperture, then 25.0 g of a methylene-bis-4-phenylisocyanate (MDi) dissolved in 500 ml of toluene was added slowly and reacted during 3 - 5 hours at 90°C - 110°C.

After finishing the reaction, the reaction product was transferred into an elongated flask and the solvent was evaporated using a rotary evaporator. Sizing agent 1 was obtained by dissolving the above product in MEK (Methyl Ethyl Ketone). A main component of the sizing agent 1 was deduced to have the following molecular structure (I) from the results of a chromatogram, an infrared absorption spectrum and of an NMR Spectrum.

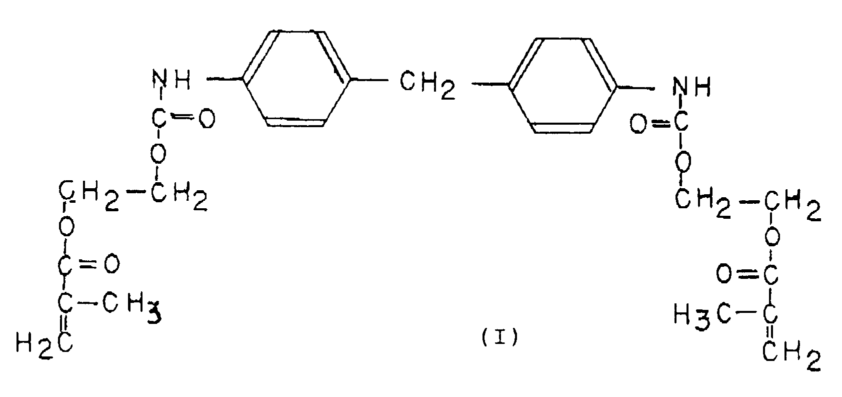

### EXAMPLE 2.

39.40 g (0.05 mole) of 1 mol of reaction product of maleic acid with 4 moles of propyleneoxide and 10 moles of ethyleneoxide, of structure: 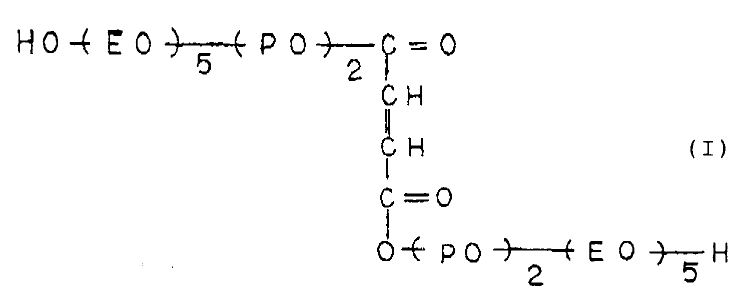
wherein,
- PO: represents 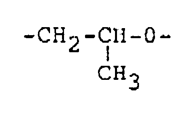 and
- EO: represents -CH₂-CH₂-O- ,
1,000 ml of toluene and 0.01 g of hydroquinone were put in the same reaction vessel which was used in Example 1. Then, 6.53 g (0.0375 mole) of tolylenediisocyanate (2, 4 - TDi) was added slowly and carried out a reaction for 3 - 5 hours at 90°C - 110°C.

After finishing the reaction, the solvent was removed to get sizing agent 2. The obtained sizing agent could be used in the form of an aqueous emulsion having an adjusted concentration by adding it to warm water at 70°C - 80°C slowly under agitation. A main component of the obtained sizing agent was estimated to have the following structure (II) by analysing the results of chromatography, infrared absorption spectrum and NMR spectrum:

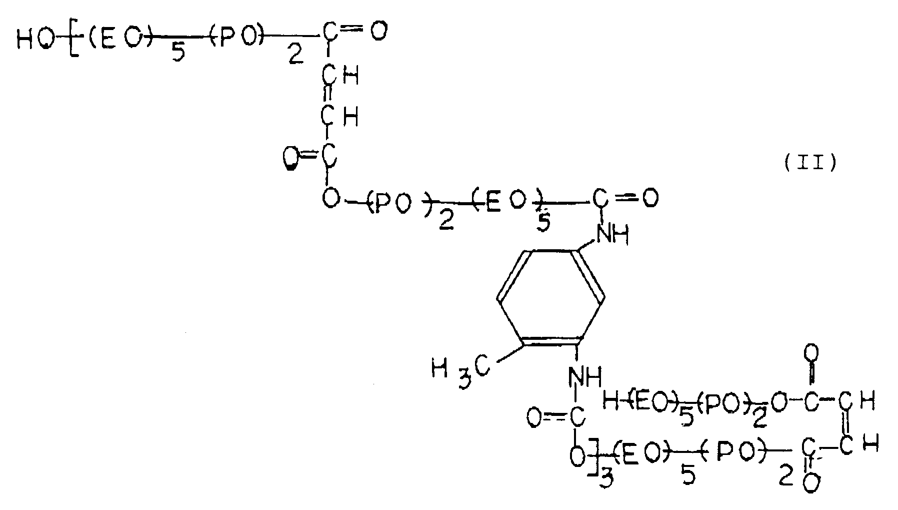

### EXAMPLE 3.

25.00 g of 2-HEMA (2-hydroxyethyl methacrylate) (a reaction product of 1 mol of methacrylic acid with 1 mole of ethyleneoxide), 1,000 ml of toluene and 0.01 g of hydroquinone was put in the same reaction vessel which was used in Example 1. Then 17.4 g of 2,4-TDi dissolved in 500 ml of toluene was added slowly and a reaction carried out for 3 - 5 hours at 90°C -110°C.

After finishing the reaction, the solvent was removed by using a rotary evaporator to get sizing agent 3. The obtained sizing agent was able to be used in the form of methylethyl ketone solution. A main component of the obtained sizing agent was estimated to have the following formula from the results of chromatograph, infrared absorption spectrum and NMR spectrum:

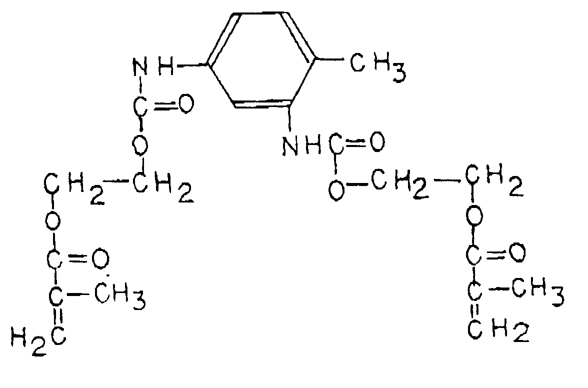

### EXAMPLE 4.

17.40 g of 2,4-TDi and 500 ml of toluene were put into the same reaction vessel as is used in Example 1, then 0.005 g of hydroquinone and 27.80 g of reaction product of 1 mol of maleic acid with 10 mole of ethyleneoxide, of structure: 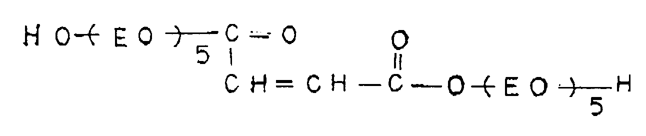
which were dissolved in 500 ml of toluene were added slowly. After carrying out a reaction for 5 hours at 70°C, 0.005 g of hydroquinone and 13.00 g of 2-HEMA dissolved in 500 ml of toluene were added slowly again and the reaction carried out for 5 hours at 90°C - 110°C.

After finishing the reaction, the solvent was removed by using rotary evaporator to get sizing agent 4. The obtained sizing agent was able to be used in the form of an aqueous-emulsion having an adjusted concentration by adding it into warm water at 70°C - 80°C slowly. The obtained sizing agent was deduced to have the following formula from the results of a chromatograph, infrared absorption spectrum and of NMR spectrum:

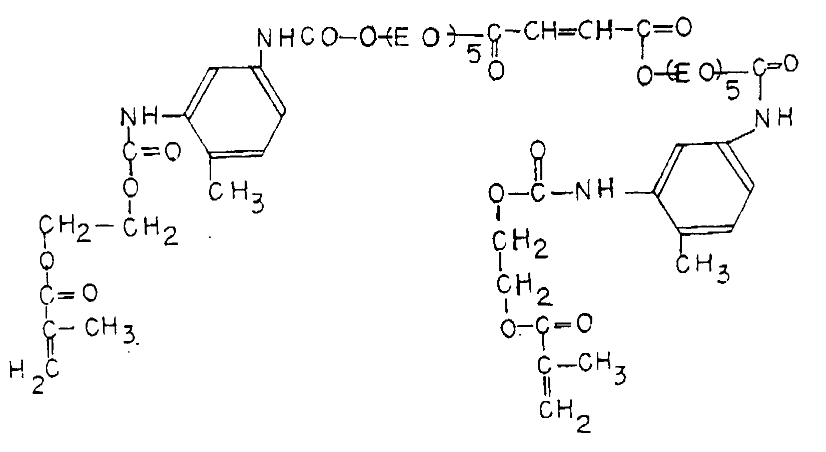

### EXAMPLE 5.

Using the following three kinds of carbon fibers CF-1, CF-2, CF-3 and sizing agents prepared in Example 1 - 4, composite materials were prepared of carbon fiber with Upica - 3140 (trade name of the unsaturated polyester resin produced by Nippon Yupica Kabushiki Kaisha), Polyset - 2167 (trade name of the unsaturated polyester resin produced by Hitachi Kasei Kabushiki Kaisha) and Neopole - 8250H (trade name of vinylester resin produced by Nippon Yupica Kabushiki Kaisha) respectively. A bisphenol type epoxy sizing agent (Epikote 828: trade name registered by Yuka Shell Kabushiki Kaisha) was also used in a conventional method for the comparison.

### Preparation of the carbon fiber from raw pitch

### 1) Preparation of CF-1

Using a petroleum pitch for thermal polymerization condensation reaction, a carbon pitch having an about 235 °C softening point and an about 55 % mesophase (optically anisotropic phase) was obtained. The mesophase pitch of 98 % purity was separated by using cylindrical centrifugal separator.

Spinning the thus obtained pitch, the obtained spun fiber was stabilized by oxidation. The oxidized pitch fiber was heated at about 1500°C to get carbon fibers of high strength, then the surface of the fiber was further oxidized by electrolytic oxidation in order to improve the surface enough for sizing treatment. Thus the carbon fiber CF- 1 was produced.

### 2) Preparation of CF-2

The carbon fiber CF-2 having high modulus of elasticity was prepared in a same manner as in CF-1 except that the heating had carried out at 2200°C.

### 3) Preparation of CF-3

The carbon fiber CF-3 was prepared by removing a sizing agent for PAN type high strength carbon fiber manufactured by Toray Kabushiki Kaisha (T-300B-6000-50B: trade name registered by Toray K,K ), being treated in a methyl ethyl ketone for two days using a supersonic washing aparatus.

The preparation of composite materials was carried out in the following way ; 2 parts of benzoylperoxide ( Kadox B-CH50 : Trade name registered by Kayaku Nurie Kabushiki Kaisha ) and 0.6 part of peroxy-di-carbonate (Perkadox 16 : trade name registered by Kayaku Nurie Kabushiki Kaisha ) were used as hardening agent for 100 parts of each matrix resin ; after pressing at 80°C for one hour, the matrix was heated at 150°C for an hour to produce composite materials. Test pieces of 2 mm thickness x 6 mm width x 14 mm strength were prepared from the above obtained composite materials.

These test pieces were undirectional CFRP containing 60 volume % of carbon fiber.

Using above test pieces, the ILSS (kg/mm² ) were measured in a condition of (a) a distance between two fulcrums: 10 mm, (b) cross head speed: 1mm/minute.

The results when CF-1, as the carbon fiber, and the Upica-3140, as the matrix resin, had been used are shown in Table 1.

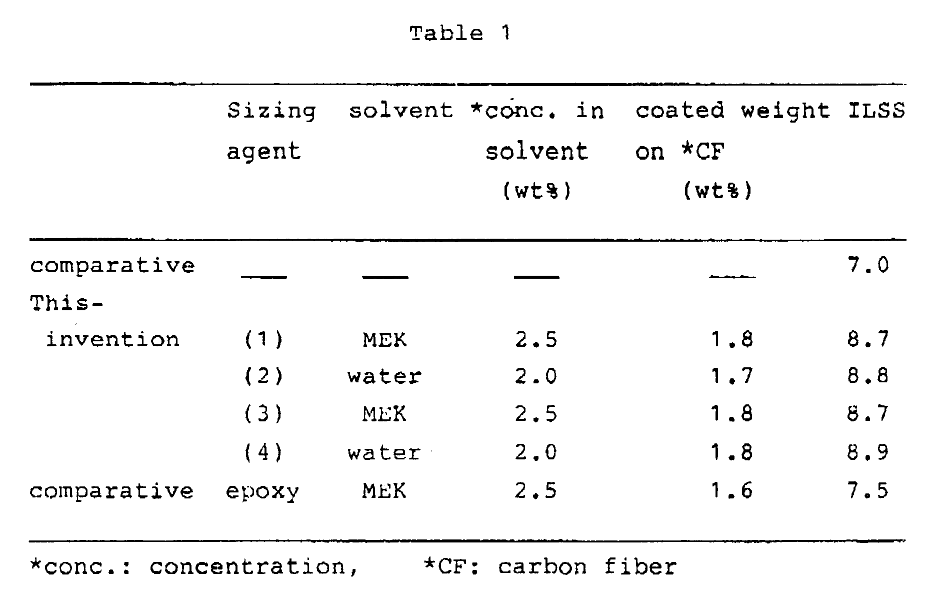

The results of Table 1 prove that the sizing agents of the present invention are useful for a composite of high strength carbon fiber derived from pitch with an unsaturated polyester matrix.

### EXAMPLE 6.

The results when CF- 1, as the carbon fiber, and Polyset-2167, as the matrix resin, had been used are shown in Table 2.

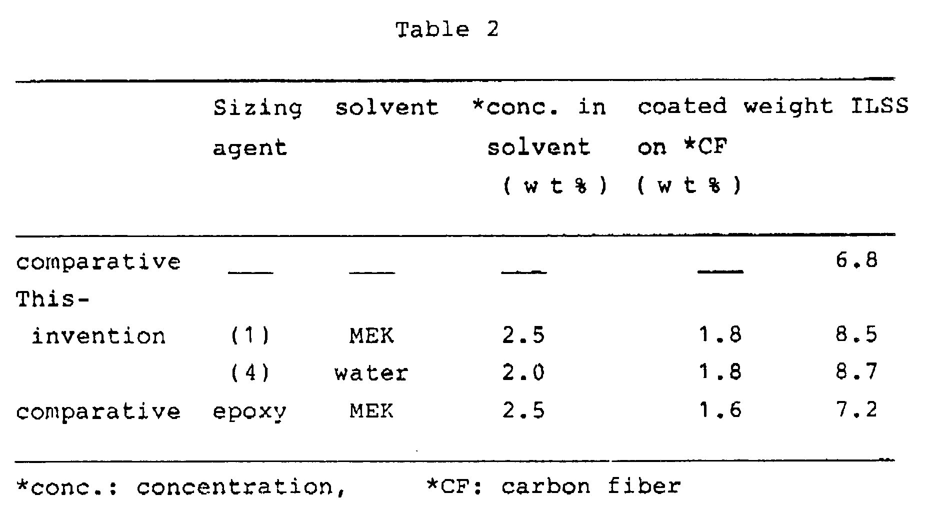

The results of Table 2 also proves that the sizing agents of the present invention are useful for a composite of a high strength carbon fiber derived from a pitch with an unsaturated polyester matrix resin.

### EXAMPLE 7.

The results when CF- 1, as the carbon fiber, and Neopole-8250H, as the matrix resin, had been used are shown in Table 3.

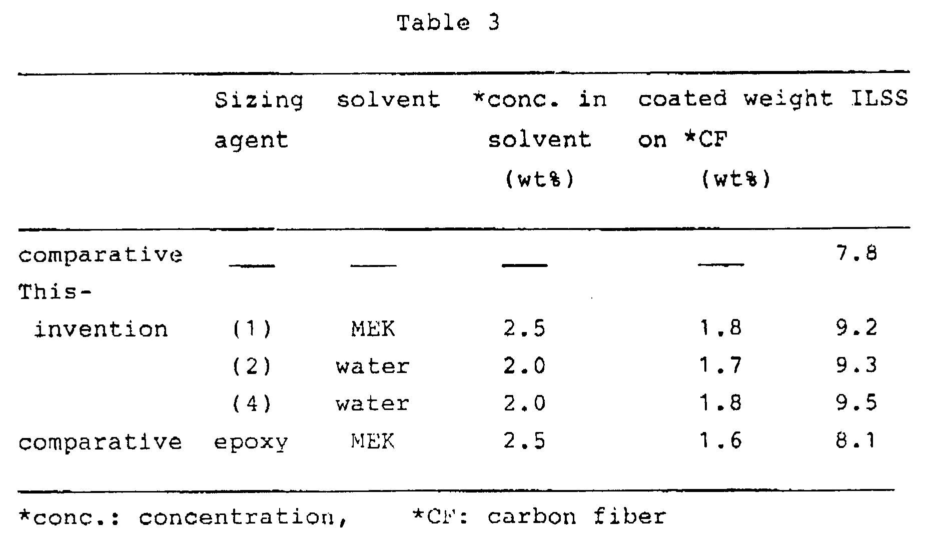

The results of Table 3 prove that the sizing agents of the present invention are quite useful for a composite of high strength carbon fiber derived from a pitch with a vinyl ester matrix resin.

### EXAMPLE 8.

The results when CF-2, as the carbon fiber, and Upica-3140, as the matrix resin, had been used are shown in Table 4.

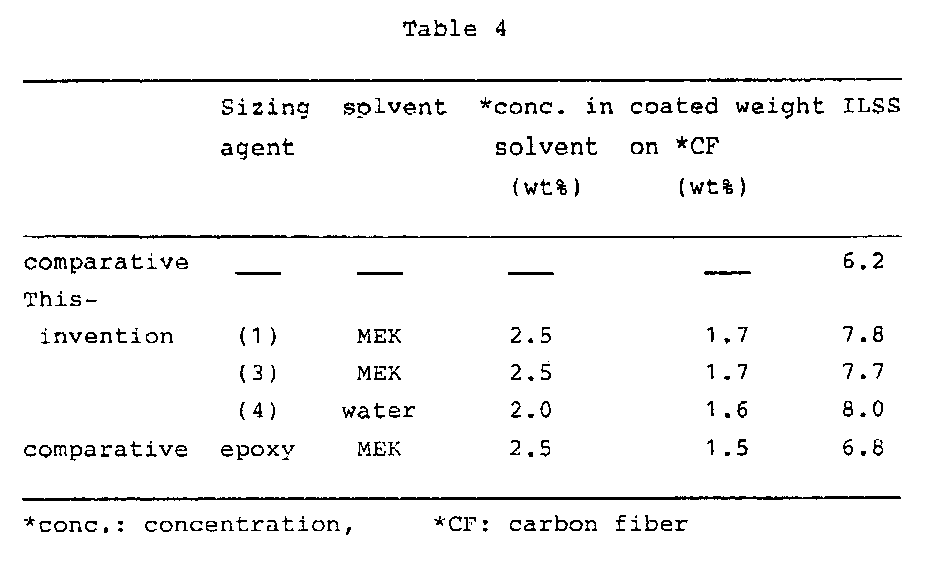

The results of Table 4 proves that the sizing agents of the present invention are quite useful for a composite of a carbon fiber derived from a pitch, obtained under a high heating temperature and has high modulus of elasticity, with an unsaturated polyester matrix resin.

### EXAMPLE 9.

The results when CF-2, as the carbon fiber, and Neopole-8250H, as the matrix resin, had been used are shown in Table 5.

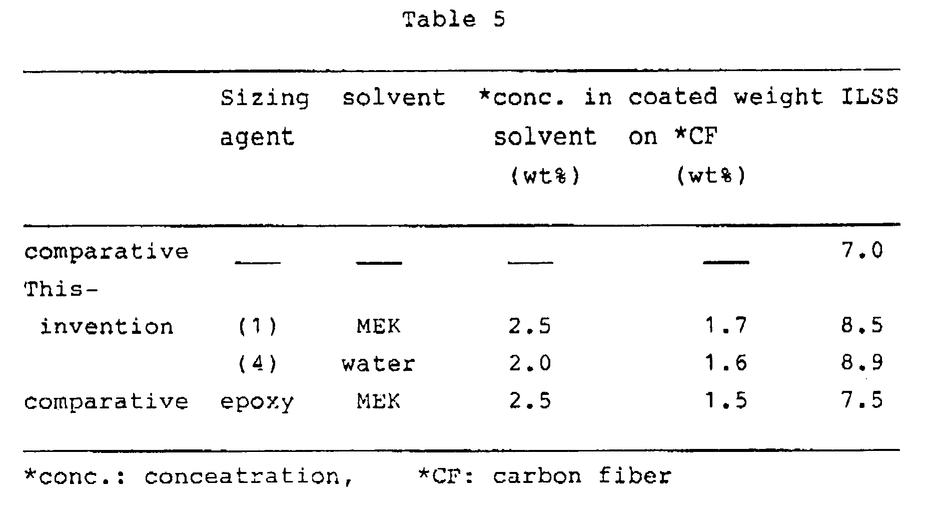

The results of Table 5 proves that the sizing agent of the present invention is quite useful for a composite of a carbon fiber derived from a pitch, obtained under a high heating temperature and has high modulus elasticity, with a vinylester matrix resin.

### EXAMPLE 10.

The results when CF-3, as the carbon fiber, and Upica-3140, as the matrix resin had used were shown in Table 6.

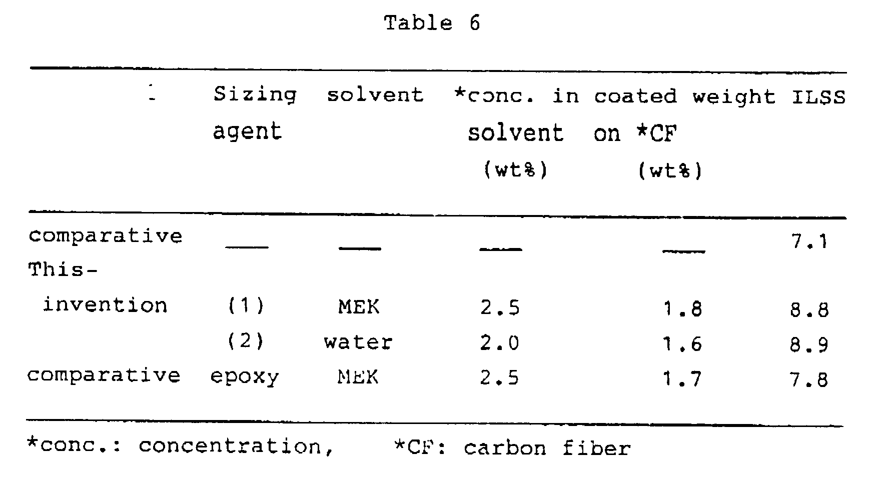

The results of Table 6 proves that the sizing agent of the present invention is useful for the carbon fiber derived from PAN fiber the same as for the carbon fiber derived from pitch.

### EXAMPLE 11.

The results when CF-3, as the carbon fiber, and polyset-2167, as the matrix resin, had been used are shown in Table 7.

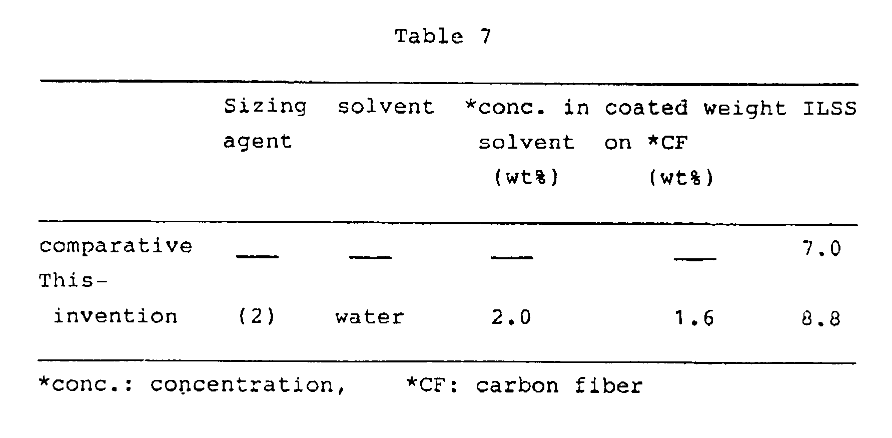

### EXAMPLE 12.

The results when CF-3, as the carbon fiber, and Neopole-8250H , as the matrix resin, had been used are shown in Table 8.

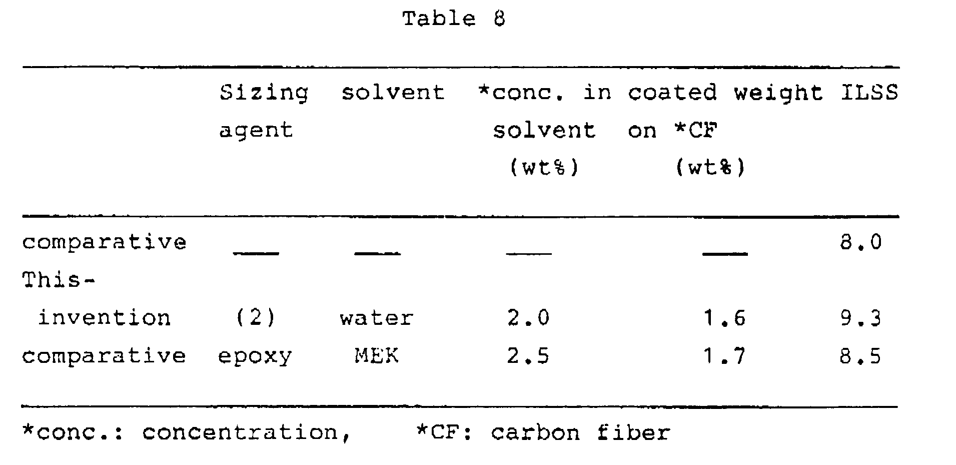

## Claims

1. A method of sizing carbon fibers, which comprises coating the fibers with a liquid sizing composition prior to their incorporation into a polymeric matrix consisting of an unsaturated polyester or a vinyl ester resin,
said sizing composition containing as a sizing agent an unsaturated urethane compound produced in a process comprising a reaction between at least one isocyanate compound with at least one unsaturated alcohol; and if more than one alcohol and/or isocyanate is used, their addition to the reaction system is arranged to avoid more than one reaction occurring simultaneously, a further reactant being added in a further step after one reaction is completed, the other of the reagents being present in excess of the stoichiometric amount; or more than two reagents of the same kind being present if one of them will only react after completion of a previous reaction;
and the final reaction product being recovered.

2. A method according to Claim 1, wherein said unsaturated alcohol is an adduct of an unsaturated carboxylic acid with an alkylene oxide.

3. A method according to Claim 1 or 2, wherein said sizing agent is an unsaturated urethane compound produced in a process wherein said reaction is carried out by the steps: a first reaction is carried out under the condition that one reactant, either said unsaturated alcohol or isocyanate compound, is present in excess of the stoichiometric amount, and after the completion of the first reaction, another unsaturated alcohol or isocyanate compound which is a different compound from that used in the first reaction is added in order to carry out further reaction.

4. A method according to Claim 1, 2 or 3, wherein said sizing agent has unsaturated bonds which are crosslinkable with double bonds in said polymeric matrix.

5. A method according to any of Claims 1 to 4, wherein said sizing composition contains the sizing agent in the form of an aqueous emulsion.

6. A method according to any of Claims 1 to 4, wherein said sizing composition contains the sizing agent in the form of a solution in an organic solvent.

7. A method according to any preceding claim, wherein said carbon fibers are oxidised at their surface before the coating with said sizing composition.

8. A composite material comprising carbon fibers which have been sized by the method of any preceding claim, incorporated in a polymeric matrix consisting of an unsaturated polyester or a vinyl ester resin, the matrix being then hardened.

9. Carbon fibers for incorporation into a polymeric matrix, consisting of an unsaturated polyester resin or a vinyl ester resin, which are coated with a sizing composition as defined in any preceding claim.

10. Sized carbon fibers according to Claim 9, wherein the surfaces of said carbon fibers were pretreated by electrolytic oxidation.

11. Sized carbon fibers according to Claim 9 or 10, wherein said urethane compounds is a reaction product of an isocyanate with an unsaturated alcohol selected from alkene alcohols having at least one unsaturated group and unsaturated alcohols prepared by the reaction of unsaturated carboxylic acids with at least one alkylene oxide.

12. Sized carbon fibers according to Claim 11, wherein said unsaturated urethane is formed with at least one unsaturated alkene alcohol selected from allyl alcohol, crotyl alcohol, 3-butene-1-ol, 1-butene-3-ol,2-butene-1,4-diol, 2-pentene-1-ol, 3-pentene-1-ol, 4-pentene-1-ol, 4-pentene-2-ol, 1-hexene-3-ol, 3-hexene-1-ol, 2-hexene-1-ol, 4-hexene-1-ol and 5-hexene-1-ol.

13. Sized carbon fibers according to Claim 11, wherein said unsaturated carboxylic acids are selected from acrylic acid, methacrylic acid, crotonic acid, vinyl acetic acid, angelic acid, maleic acid, fumaric acid, arylmalonic acid, itaconic acid and citraconic acid.

14. Sized carbon fibers according to Claim 11, wherein said alkylene oxide is selected from ethylene oxide, and propylene oxide.

## Patentansprüche

1. Verfahren zum Schlichten von Carbonfasern, welches das Überziehen der Fasern mit einer flüssigen Schlichtungszusammensetzung vor ihrem Einbau in eine polymere Matrix aus einem ungesättigten Polyester- oder einem Vinylesterharz umfaßt, wobei die Schlichtungszusammensetzung als Schlichtungsmittel eine ungesättigte Urethanverbindung enthält, die in einem Verfahren umfassend die Reaktion von mindestens einer Isocyanatverbindung mit mindestens einem ungesättigten Alkohol hergestellt wird; und falls mehr als ein Alkohol und/oder Isocyanat verwendet wird, erfolgt ihre Zugabe zum Reaktionssystem so, daß mehr als eine gleichzeitig auftretende Reaktion vermieden wird, wobei eine weitere Reaktante in einem weiteren Schritt nach Abschluß der einen Reaktion zugegeben wird, während die andere der Reaktanten im stöchiometrischen Überschuß vorliegt; oder es sind mehr als zwei Reaktanten der gleichen Art anwesend, wenn eines davon nur nach Abschluß der vorhergehenden Reaktion reagiert; und
das Endreaktionsprodukt gewonnen wird.

2. Verfahren nach Anspruch 1, worin der ungesättigte Alkohol ein Addukt einer ungesättigten Carbonsäure mit einem Alkylenoxid ist.

3. Verfahren nach einem der Ansprüche 1 oder 2, worin das Schlichtungsmittel eine ungesättigte Urethanverbindung ist, die in einem Verfahren hergestellt wird, worin die Reaktion mit den folgenden Schritten erfolgt: die erste Reaktion wird so durchgeführt, daß eine Reaktante, entweder der ungesättigte Alkohol oder die Isocyanatverbindung im stöchiometrischen Überschuß vorliegt, und nach Abschluß der ersten Reaktion ein weiterer ungesättigter Alkohol oder eine Isocyanatverbindung, die verschieden von der in der ersten Reaktion verwendeten Verbindung ist, zugegeben wird, um die weitere Reaktion durchzuführen.

4. Verfahren nach einem der Ansprüche 1, 2 oder 3, worin das Schlichtungsmittel ungesättigte Bindungen hat, die mit den Doppelbindungen in der Polymermatrix vernetzbar sind.

5. Verfahren nach einem der Ansprüche 1 bis 4, worin die Schlichtungszusammensetzung das Schlichtungsmittel in Form einer wäßrigen Emulsion enthält.

6. Verfahren nach einem der Ansprüche 1 bis 4, worin die Schlichtungszusammensetzung das Schlichtungsmittel in Form einer Lösung in einem organischen Lösungsmittel enthält.

7. Verfahren nach einem der vorhergehenden Ansprüche, worin die Carbonfasern auf ihrer Oberfläche vor dem Überzug mit der Schlichtungszusammensetzung oxidiert werden.

8. Verbundmaterial, umfassend Carbonfasern, die nach dem Verfahren gemäß einem der vorhergehenden Ansprüche geschlichtet wurden, und die in eine Polymermatrix aus einem ungesättigten Polyester- oder Vinylesterharz eingebaut wurden, worauf die Matrix gehärtet wird.

9. Carbonfasern zum Einbau in eine Polymermatrix, bestehend aus einem ungesättigten Polyesterharz oder einem Vinylesterharz, die mit einer Schlichtungszusammensetzung, wie in einem der vorhergehenden Ansprüche definiert, überzogen sind.

10. Geschlichtete Carbonfasern nach Anspruch 9, worin die Oberflächen der Carbonfasern durch elektrolytische Oxidation vorbehandelt wurden.

11. Geschlichtete Carbonfasern nach Anspruch 9 oder 10, worin die Urethanverbindungen ein Reaktionsprodukt eines Isocyanats mit einem ungesättigten Alkohol, ausgewählt aus Alkenalkoholen mit mindestens einer ungesättigten Gruppe und ungesättigten Alkoholen, hergestellt durch Reaktion von ungesättigten Carbonsäuren mit mindestens einem Alkylenoxid, ist.

12. Geschlichtete Carbonfasern nach Anspruch 11, worin das ungesättigte Urethan mit mindestens einem ungesättigten Alkenalkohol, ausgewählt aus Allylalkohol, Crotylalkohol, 3-Buten-1-ol, 1-Buten-3-ol, 2-Buten-1,4-diol, 2-Penten-1-ol, 3-Penten-1-ol, 4-Penten-1-ol, 4-Penten-2-ol, 1-Hexen-3-0l, 3-Hexen-1-ol, 2-Hexen-1-ol, 4-Hexen-1-ol und 5-Hexen-1-ol gebildet ist.

13. Geschlichtete Carbonfasern nach Anspruch 11, worin die ungesättigten Carbonsäuren ausgewählt sind aus Acrylsäure, Methacrylsäure, Crotonsäure, Vinylessigsäure, Angelicasäure, Maleinsäure, Fumarsäure, Arylmalonsäure, Itaconsäure und Citraconsäure.

14. Geschlichtete Carbonfasern nach Anspruch 11, worin das Alkylenoxid ausgewählt ist aus Ethylenoxid und Propylenoxid.

## Revendications

1. Procédé pour apprêter des fibres de carbone, lequel procédé consiste à revêtir les fibres avec une composition liquide d'apprêtage avant leur incorporation dans une matrice polymère constituée par une résine polyester insaturée ou une résine ester vinylique,
cette composition d'apprêtage contenant comme apprêt un composé d'uréthane insaturé produit dans un procédé comprenant une réaction entre au moins un composé isocyanate avec au moins un alcool insaturé et, si on utilise plus d'un alcool et/ou plus d'un isocyanate, leur addition au système de réaction étant prévue pour éviter que plus d'une réaction ait lieu simultanément, un autre réactif étant ajouté dans une étape ultérieure après la terminaison d'une réaction, l'autre réactif étant présent en excès de la quantité stoechiométrique, ou plus de deux réactifs du même type étant présents si l'un d'entre eux ne réagit qu'après terminaison d'une réaction antérieure,
et le produit de réaction final étant récupéré.

2. Procédé selon la revendication 1, dans lequel l'alcool insaturé est un produit d'addition d'un acide carboxylique insaturé avec un oxyde d'alcoylène.

3. Procédé selon la revendication 1 ou la revendication 2, dans lequel l'apprêt est un composé d'uréthane insaturé produit dans un procédé dans lequel la réaction est conduite par les étapes suivantes : une première réaction est conduite dans des conditions telles qu'un réactif, soit l'alcool insaturé, soit le composé isocyanate, soit présent en excès de la quantité stoechiométrique et, après la terminaison de la première réaction, un autre alcool insaturé ou un autre composé isocyanate, qui est un composé différent de celui utilisé dans la première réaction, est ajouté afin de conduire une autre réaction.

4. Procédé selon l'une des revendications 1, 2 ou 3, dans lequel l'apprêt a des liaisons insaturées qui sont réticulables avec des doubles liaisons dans la matrice polymère.

5. Procédé selon l'une des revendications 1 à 4, dans lequel la composition d'apprêtage contient l'apprêt sous la forme d'une émulsion aqueuse.

6. Procédé selon l'une des revendications 1 à 4, dans lequel la composition d'apprêtage contient l'apprêt sous la forme d'une solution dans un solvant organique.

7. Procédé selon l'une des revendications précédentes, dans lequel la surface des fibres organiques est oxydée avant revêtement par la composition d'apprêtage.

8. Matériau composite comprenant des fibres de carbone qui ont été apprêtées par le procédé selon l'une des revendications précédentes, incorporées dans une matrice polymère constituée par une résine polyester insaturée ou une résine ester vinylique, la matrice étant ensuite durcie.

9. Fibres de carbone destinées à être incorporées dans une matrice polymère, constituée par une résine polyester insaturée ou une résine ester vinylique, qui sont revêtues avec une composition d'apprêtage comme défini selon l'une des revendications précédentes.

10. Fibres de carbone apprêtées selon la revendication 9, dont les surfaces ont été préalablement traitées par oxydation électrolytique.

11. Fibres de carbone apprêtées selon la revendication 9 ou la revendication 10, dans lesquelles le composé d'uréthane est un produit de réaction d'un isocyanate avec un alcool insaturé choisi parmi des alcools alcéniques ayant au moins un groupe insaturé et des alcools insaturés préparés par la réaction d'acides carboxyliques insaturés avec au moins un oxyde d'alcoylène.

12. Fibres de carbone apprêtées selon la revendication 11, dans lesquelles l'uréthane insaturé est formé avec au moins un alcool alcénique insaturé choisi parmi les suivants : alcool allylique, alcool crotylique, 3-butène-1-ol, 1-butène-3-ol, 2-butène-1,4-diol, 2-pentène-1-ol, 3-pentène-1-ol, 4-pentène-1-ol, 4-pentène-2-ol, 1-hexène-3-ol, 3-hexène-1-ol, 2-hexène-1-ol, 4-hexène-1-ol et 5-hexène-1-ol.

13. Fibres de carbone apprêtées selon la revendication 11, dans lesquelles l'acide carboxylique insaturé est choisi parmi les suivants : acide acrylique, acide méthacrylique, acide crotonique, acide vinyl acétique, acide angélique, acide maléique, acide fumarique, acide arylmalonique, acide itaconique et acide citraconique.

14. Fibres de carbone apprêtées selon la revendication 11, dans lesquelles l'oxyde d'alcoylène est choisi parmi l'oxyde d'éthylène et l'oxyde de propylène.
